(19)

**Europäisches Patentamt**
**European Patent Office**
**Office européen des brevets**

(11) **EP 4 765 812 A1**

(12) **EUROPEAN PATENT APPLICATION**

(43) Date of publication:
24.06.2026 Bulletin 2026/26

(21) Application number: 24307197.4

(22) Date of filing: **19.12.2024**

(51) International Patent Classification (IPC):
**H04N 19/147** (2014.01)

(52) Cooperative Patent Classification (CPC):
**H04N 19/147**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **LE MEUR, Olivier
  35160 TALENSAC (FR)**

• **SCHNITZLER, Francois
  56890 SAINT AVE (FR)**
• **LAMBERT, Anne
  35250 SAINT-AUBIN-D'AUBIGNE (FR)**
• **DAMODARAN, Bharath Bhushan
  56000 VANNES (FR)**
• **CHEN, Ya
  35700 RENNES (FR)**
• **GALPIN, Franck
  35235 THORIGNE-FOUILLARD (FR)**

(74) Representative: **Vossius & Partner
Patentanwälte Rechtsanwälte mbB
Siebertstraße 3
81675 München (DE)**

(54) **PRUNING LATENT VARIABLE FOR HYBRID IMPLICIT NEURAL REPRESENTATION (INR)**

(57)    Systems, methods, and instrumentalities are disclosed for pruning latent variables for a hybrid implicit neural representation (INR). A device for video encoding may include a processor. The device may obtain a plurality of latent variables associated with an image. The device may identify a first portion of the plurality of latent variables and/or a second portion of the plurality of latent variables. The device may determine an INR network parameter based on the second portion of the plurality of latent variables. The device may encode the image based on the second portion of the plurality of latent variables and/or the INR network parameter. The device may generate a latent variable mask by analyzing the image. The device may apply the latent variable mask to the plurality of latent variables to identify the first portion of the plurality of latent variables and/or the second portion of the plurality of latent variables.

FIG. 13

Description

BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

BRIEF SUMMARY

Systems, methods, and instrumentalities are disclosed for pruning latent variables for a hybrid implicit neural representation (INR). In examples, an encoding device may include a processor. The device may be configured to obtain a plurality of latent variables associated with an image. The device may identify a first portion of the plurality of latent variables and/or a second portion of the plurality of latent variables. The device may determine an INR network parameter based on the second portion of the plurality of latent variables. The device may encode the image based on the second portion of the plurality of latent variables and/or the INR network parameter.

The device may include one or more features. For examples, the device may generate a latent variable mask by analyzing the image. The device may apply the latent variable mask to the plurality of latent variables to identify the first portion of the plurality of latent variables and/or the second portion of the plurality of latent variables. The device may modify the plurality of latent variables by applying a default value to the first portion of the plurality of latent variables. The device may train an INR network based on the modified plurality of latent variables. The INR network parameter may be determined based on the trained INR network. The device may generate a latent variable mask based on a Laplacian pyramid, a just noticeable differences (JND) map, or a binary saliency map associated with the image. The device may disable the first portion of the plurality of latent variables for training an INR network. The device may use the second portion of the plurality of latent variables for training the INR network. The INR network parameter may be determined based on the trained INR network. The device may include an indication of the latent variable mask in video data. The device may identify the first portion or the second portion of the plurality of latent variables based on a condition that a quality of experience (QoE) associated with a spatial coordinate of the image satisfies a threshold. The device may provide the second portion of the plurality of latent variables to an INR network. The device may obtain, based on the INR network, a refined second portion of the plurality of latent variables. The INR network parameter may be determined based on the refined second portion of the plurality of latent variables. The device may include an indication of the refined second portion of the plurality of latent variables in video data. The device may include an indication of the second portion of the plurality of latent variables and/or an indication of the INR network parameter in video data.

A device for video decoding may obtain, from video data, an indication of a portion of a plurality of latent variables associated with an image being disabled. The device may infer a first portion of the plurality of latent variables based on the indication. The device may obtain, from the video data, a second portion of the plurality of latent variables associated with the image. The device may decode the image based on an INR network and/or the plurality of latent variables having the first portion and/or the second portion of the plurality of latent variables.

The device may include one or more features. The device may infer a default value associated with the first portion of the plurality of latent variables. The device may apply the default value associated with the first portion of the plurality of latent variables to the INR network. The device may generate a prediction of the image based on the first portion having the default value and/or the second portion of the plurality of latent variables. The device may identify the first portion of the plurality of latent variables based on the indication of the portion of a plurality of latent variables associated with an image being disabled. The device may skip decoding the first portion of the plurality of latent variables. The indication of a portion of a plurality of latent variables may be configured to indicate a latent variable mask in video data. The device may identify the first portion of the plurality of latent variables and/or the second portion of the plurality of latent variables based on the latent variable mask. The device may, based on a first condition that the latent variable mask indicates that a latent variable associated with a spatial coordinate is enabled, apply a latent variable to the INR network. The device may, based on a second condition that the latent variable mask indicates that the latent variable associated with the spatial coordinate is disabled, apply a default value to the INR network.

BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.

FIG. 2 shows an example video encoder according to one or more embodiments of the present disclosure.

FIG. 3 shows an example video decoder according to one or more embodiments of the present disclosure.

FIG. 4 illustrates an example of an implicit neural representation (INR) network.

FIG. 5 illustrates an example of a video encoding system.

FIG. 6 illustrates an example of a video decoding system.

FIG. 7 illustrates an example of a hybrid INR network.

FIG. 8 is a flow diagram illustrating an example video encoder that may apply a hybrid INR network.

FIG. 9 is a flow diagram illustrating an example video decoder that may apply a hybrid INR network

FIG. 10 is a diagram illustrating an example of a prediction of a latent variable distribution using an example spatial context.

FIG. 11 is a block diagram illustrating an example video encoder applying a predictive hybrid INR network.

FIG. 12 is a block diagram illustrating an example video decoder applying a predictive hybrid INR network.

FIG. 13 is a diagram illustrating an example pre-analysis of latent variables including a latent variable mask.

FIG. 14 is a flow diagram illustrating an example encoding routine.

FIG. 15 is a flow diagram illustrating an example decoding routine.

FIG. 16 is a flow diagram illustrating an example decoder that may use a hybrid INR algorithm.

## DETAILED DESCRIPTION

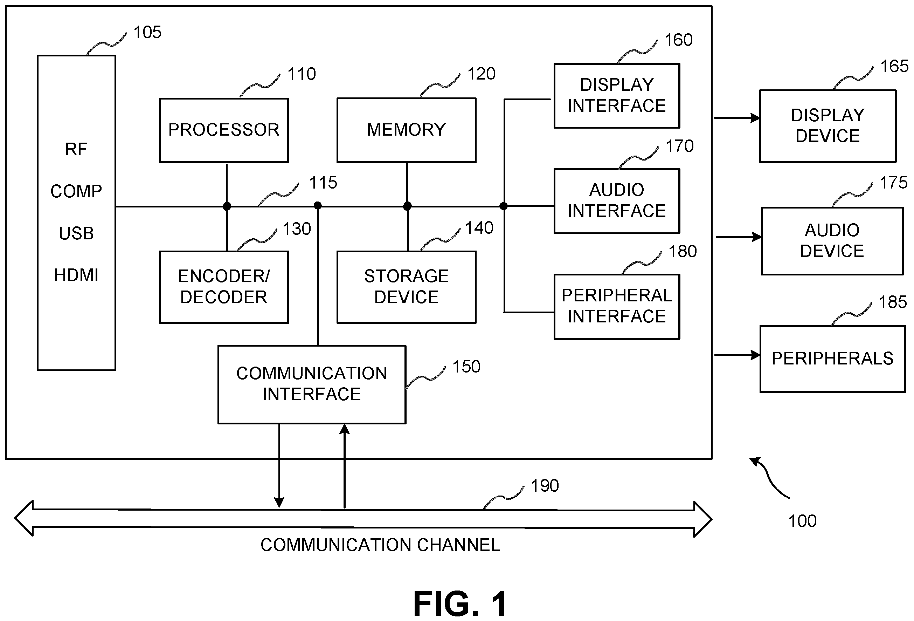

In describing the various embodiments of the present disclosure, certain terminology is used herein for convenience only and should not be considered as limiting such embodiments. In the drawings, the same reference numerals are employed for designating the same elements throughout the several figures and the present description.
Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.
One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.
The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.
The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

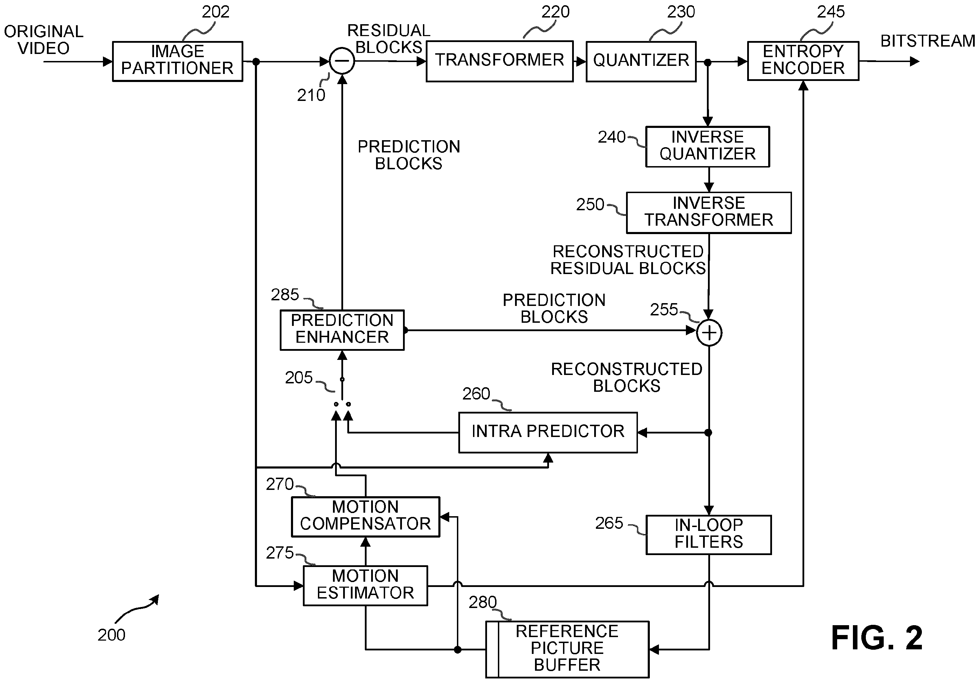

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

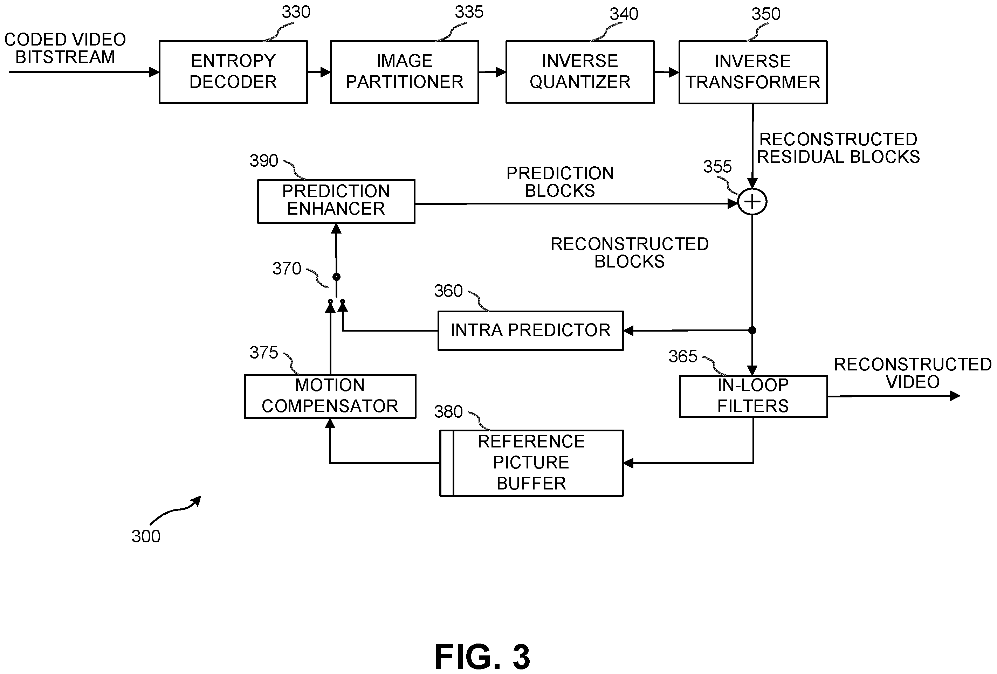

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, Cb, Cr).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

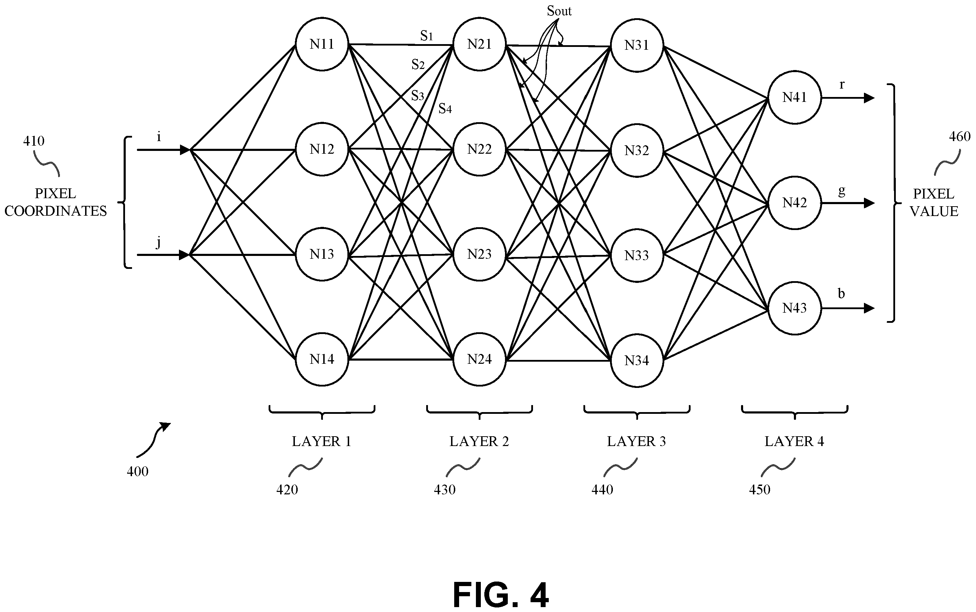

FIG. 4 illustrates an example of an implicit neural representation (INR) network 400. The INR network may be a neural network comprising multiple layers, one or more (e.g., each) of which may include multiple nodes (denoted by circles in FIG. 4). The architecture of the INR network may be characterized by the number of layers, the number of nodes in a layer, and/or the way those nodes are connected. In the example of FIG. 4, the network 400 may include four layers 420, 430, 440, and 450 that may be connected (e.g., fully connected). For example, the first layer 420 may include four nodes N11, N12, N13, and N14, each of which may receive the coordinate values (i, j) 410 of a pixel x, and may output a signal that may, in turn, feed the nodes of the next layer, N21, N22, N23, and N24. The second layer 430 may include four nodes N21, N22, N23, and N24, each of which may receive the output signals of the nodes from the previous layer, N11, N12, N13, and N14, and may output a signal that may, in turn, feed the nodes of the next layer, N31, N32, N33, and N34. The fourth layer 450 may include three nodes N41, N42, and N43, each of which may receive the output signals of the nodes from the previous layer, N31, N32, N33, N34, and output a color component value 460 of the pixel x (e.g., r, g, and b, or color component values of any other color model, such as y, u, and v).

A (e.g., each) node in the network 400 may represent an operator that may generate an output signal based on the node's inputs. For example, node N21 of the second layer 430 may receive, as an input, the output signals of nodes N11, N12, N13, and N14 (e.g., $s_1$, $s_2$, $s_3$, and $s_4$, respectively). These inputs may be translate (e.g., mapped) to an output signal $s_{out}$ that may feed the nodes of the third layer 440. A node's operator may be expressed as follows:

$$s_{out} = A\left(p_0 + \sum_{i=1}^{L} p_i \cdot s_i\right), \tag{1}$$

where L may denote the number of input signals (e.g., the number of nodes from the previous layer that connects to the node), $s = \{s_i : i = 1\ to\ L\}$ may denote the node's input signal vector, $s_{out}$ may denote the node's output signal, $p = \{p_i : i = 0\ to\ L\}$ may denote the node's parameter vector (or weight vector), and A may denote an activation function (e.g., ReLU, Sigmoid, or Tanh). The weight vectors (and parameters of the activation functions, if such parameters exist) of respective nodes may be collectively referred to as the parameters $\theta$ of the network 400, which may be determined through a training process. The network operation, denoted by $f_\theta$, may be determined (e.g., defined) by the network parameters $\theta$.

The INR network 400 may be trained to predict a pixel value of an image, x(i,j), based on the pixel's coordinates (i,j). This may be expressed as $f_\theta(i, j) = (r, g, b)$ (or $f_\theta(i, j) = (y, u, v)$). During a training phase of the INR network 400, the parameters $\theta$ (or a subset of them) may be determined. This may be done, for example, via an optimization process through which the parameters $\theta$ that may minimize a cost function can be determined. For example, the following cost function may be used:

$$Cost = D(x, f_\theta) + \lambda \times R(\theta) \tag{2}$$

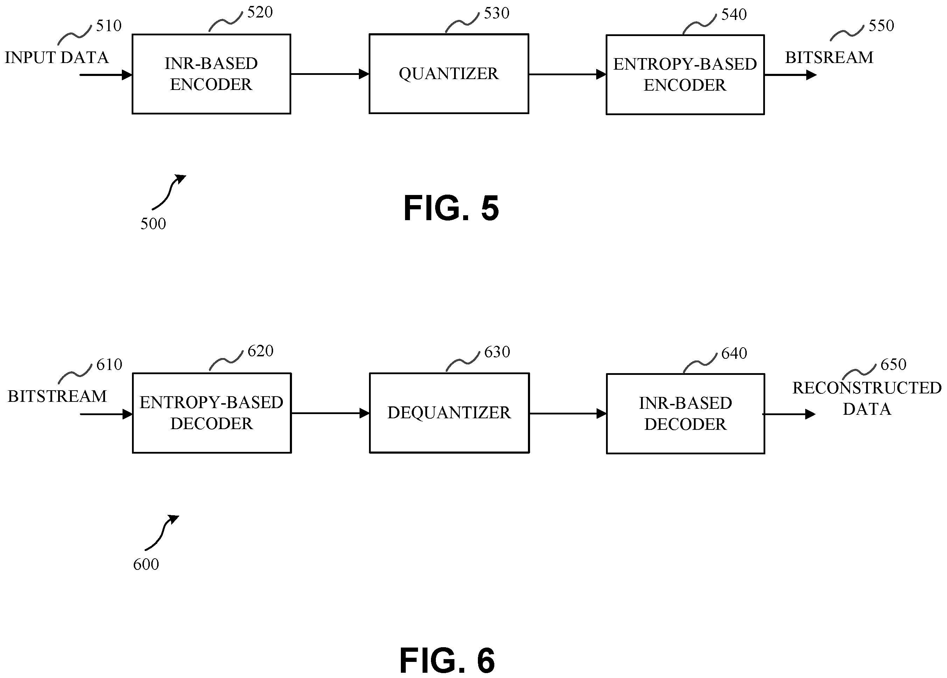

where, D may be a distortion measure of the fidelity of the estimated pixel values, provided by $f_\theta$, relative to the ground truth (e.g., the corresponding pixel values from the original image, denoted by x). R may be the resulting bitrate of the encoded parameters $\theta$ (e.g., encoded by quantization and entropy coding as discussed with respect to FIG. 5). A trade-off parameter $\lambda$ may be set to determine the balance between D and R. The distortion measure D may be any metric that measures the distance (or similarity) between the original image x and its estimated version provided by $f_\theta$. Such a metric may include, for example, a mean squared error metric or a learned perceptual image patch similarity (LPIPS) metric. For example, a mean squared error metric may be expressed as:

$$D_{MSE} = \frac{1}{WH}\sum_{i\in W, j\in H}(x(i,j) - f_\theta(i,j))^2, \tag{3}$$

where W and H may be the width and height of the image x that the INR network may be trained to predict. The optimization of the network parameters $\theta$, according to equation (2), may be performed by a machine learning optimization technique such as a batch gradient descent technique. Following the training of the INR network 400 and using the optimal parameters $\theta$ (obtained via the optimization process), the INR network may be applied to predict a pixel value based on its corresponding coordinate values.

FIGS. 5 and 6 illustrate examples of using an INR network to encode and decode images. FIG. 5 illustrates an example of a video encoding system 500. As shown in FIG. 5, the video encoding system 500 may include an INR-based encoder 520, a quantizer 530, and an entropy-based encoder 540. The INR-based encoder 520 may be configured to receive input data 510 to be coded. The input data 510 may include data associated with a frame of a video (e.g., an image or a picture), a frame or picture of a surface representation of an object, or a frame or picture of volumetric data. To code the input data 510, the INR-based encoder 520 may use (e.g., train) an INR network (e.g., the INR network 400 described herein). Based on the input data 510, the INR-based encoder 520 may optimize a cost function associated with the function $f_\theta$, representative of the INR network, to determine the optimal network parameters $\theta$. For example, for an input image with dimensions $W$ and $H$, $W$ times $H$ pairs of pixel coordinates $(i,j)$ and corresponding pixel values $x(i,j)$ may be used to train the INR network, for example, according to equation (2). The optimal parameters, generated by the INR-based encoder 520, may be quantized by the quantizer 530, and the quantized parameters may be entropy-coded, by the entropy-based encoder 540, into a bitstream 550. The optimal parameters, generated by the INR-based encoder 520, may be coded, for example, using neural compression codecs such as a neural network coding (NNC) codec or an MPEG-7 codec. The bitstream 550 may be used by a decoder to reconstruct the input image 510, for example, as described with reference to FIG. 6.

FIG. 6 illustrates an example of a video decoding system 600. The decoder 600 may be configured to reverse the operation of the encoder 500 of FIG. 5. As shown in FIG. 6, the video decoding system 600 may include an entropy-based decoder 620, a dequantizer 630, and an INR-based decoder 640. The decoding system 600 may receive the bitstream 610 (e.g., generated by the encoder 500 of FIG. 5) and may entropy-decode quantized INR network parameters at 620. The dequantizer 630 may be employed to dequantize the quantized INR network parameters, obtaining a restored version of the INR network parameters that may be provided to the INR-based decoder 640.

The INR-based decoder 640 may use the trained INR network, determined (e.g., defined) by the restored INR network parameters, to generate reconstructed data 650. For example, to decode an input image (e.g., a current image of a video), the INR-based decoder 640 may use the trained INR network to predict the value of or to evaluate $f_\theta$ using the coordinates of a (e.g., any) pixel of the input image. The decoding system 600 may be used to reconstruct the encoded input image, reconstruct a region of the encoded input image, or progressively reconstruct the encoded input image. For example, at the encoding system 500 of FIG. 5, an INR network may be trained to predict pixel values of an image with dimensions $W = 256$ by $H = 256$ based on the corresponding coordinates of the pixels. At the decoding system 600, pixel values of the image may be predicted by evaluating the trained INR network using the full coordinate set used for the training of the INR network, including all pairs of $i \in 0, 1, ..., 255$ and $j \in 0, 1, ..., 255$. The pixel values of the image may also be predicted by using a subset of the full coordinate set, including coordinates from a region of the encoded image. The pixel values of the image may also be predicted by using a first subset of the full coordinate set, including coordinates of a subsampled version of the image (e.g., which may form a low-resolution version of the encoded image), and a second subset of the full coordinate set, including the remaining coordinates. Any set of coordinates may be used to predict the corresponding pixel values, for example, in order to interpolate or extrapolate the encoded image.

Hybrid INR networks may be used to represent video data, including images, videos, 3D objects, and/or volumetric data, among other types of data. In an example of a hybrid INR network, coordinates associated with video data may be first mapped into one or more latent variables (or one or more feature vectors). The latent variables may be used as inputs for the hybrid INR neural network.

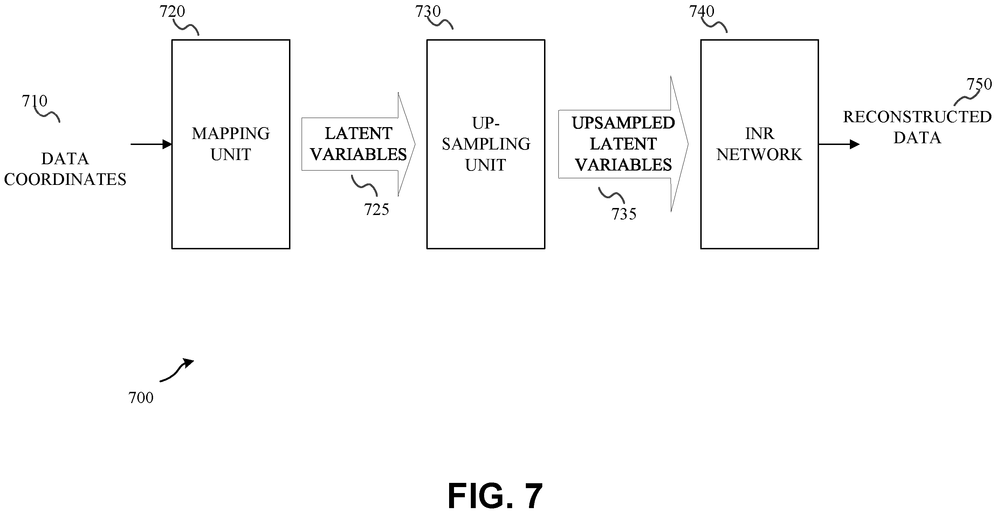

FIG. 7 illustrates an example of a hybrid INR network 700. The hybrid INR network 700 may be used by the INR-based encoder 520 of FIG. 5 and/or the INR-based decoder 640 of FIG. 6. In the example of FIG. 7, during the encoding of input data (e.g., the training of the network 700), coordinates 710 of the input data may be mapped (e.g., by a mapping unit 720) into one or more latent variables 725. The mapping may be implemented using a lookup table or a hash function, for example. The mapping may involve a transformation, such as a Fourier transformation, a coordinate transformation, a normalization transformation, or a combination thereof. The latent variables 725 may be up-sampled (e.g., by an up-sampling unit 730), resulting in up-sampled latent variables 735. The up-sampled latent variables may be provided as an input to an INR network 740 (e.g., such as INR network 400 of FIG. 4) that may be trained to produce reconstructed data 750. The latent variables 725 may be trained together with the parameters $\theta$ of the INR network 740, resulting in optimal network parameters and/or optimal latent variables. Using the system architecture shown in FIG. 7, local attributes of the input data may be better handled. For example, a group of latent variables corresponding to a given part of the input data may be uncorrelated with other groups of latent variables corresponding to other parts of the input data. As such, groups of latent variables may be tailored to (e.g., to better represent) corresponding parts of the input data.

Following the training of the hybrid INR network 700 (e.g., at the encoder 520 of FIG. 5), the learned latent variables 725 and/or the network parameters may be quantized (e.g., by the quantizer 530 of FIG. 5) and coded (e.g., by the entropy-based encoder 540) into a bitstream. During inference, the latent variable 725 and/or the network parameters of the trained INR network 740 may be decoded (e.g., by the entropy-based decoder 620 of FIG. 6) from the bitstream and dequantized (e.g., by the dequantizer 630 of FIG. 6). The decoded and dequantized latent variables may be up-sampled at 730 and fed into the trained INR network 740 to reconstruct data 750, using the decoded and dequantized network parameters of the INR network.

An example hybrid INR network may be a coordinate-based low complexity hierarchical image codec. In an example hybrid INR model (e.g., an INR network), the latent variables may be arranged in hierarchical layers (e.g., or channels) ranging from a low-resolution representation (e.g., that provides for compact representation of smooth image regions) to a high-resolution representation (e.g., that captures the fine details of the image).

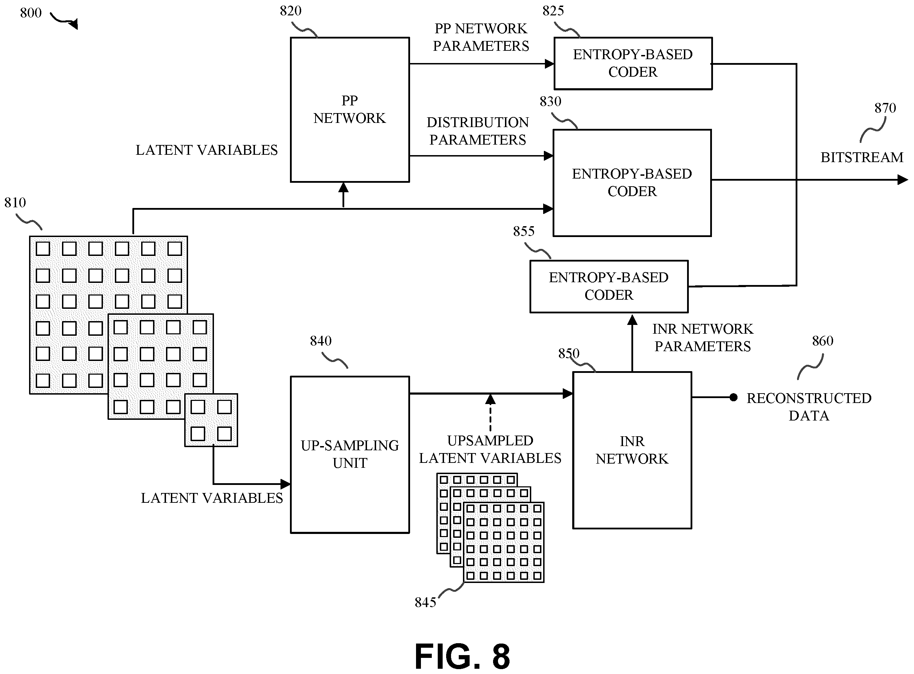

In hybrid INR networks, the latent variables (e.g., denoted by y), may be the largest contributor to the bitrate (e.g., several orders of magnitude larger than that contributed by the INR network parameters). To reduce the transmission cost of latent variables entropy coding the latent variables based on their learned distributions may be performed. Examples of a hybrid INR network may be described herein, for example in reference to FIGS. 8-10.

FIG. 8 is a block diagram illustrating an example video encoder 800 applying a hybrid INR network. The encoder 800 may include a probability prediction (PP) network 820, an up-sampling unit 840, an INR network 850, and/or entropy-based coders 825, 830, 855. The encoder 800 may be configured to process latent variables 810 (e.g., latent variables 725 generated by the mapping unit 720 of FIG. 7). The encoder 800 up-samples, by the up-sampling unit 840, the latent variables. Based on these upsampled latent variables 845 the INR network 850 may be trained (overfitted) to produce reconstructed data 860 (e.g., a reconstructed image of a video frame).

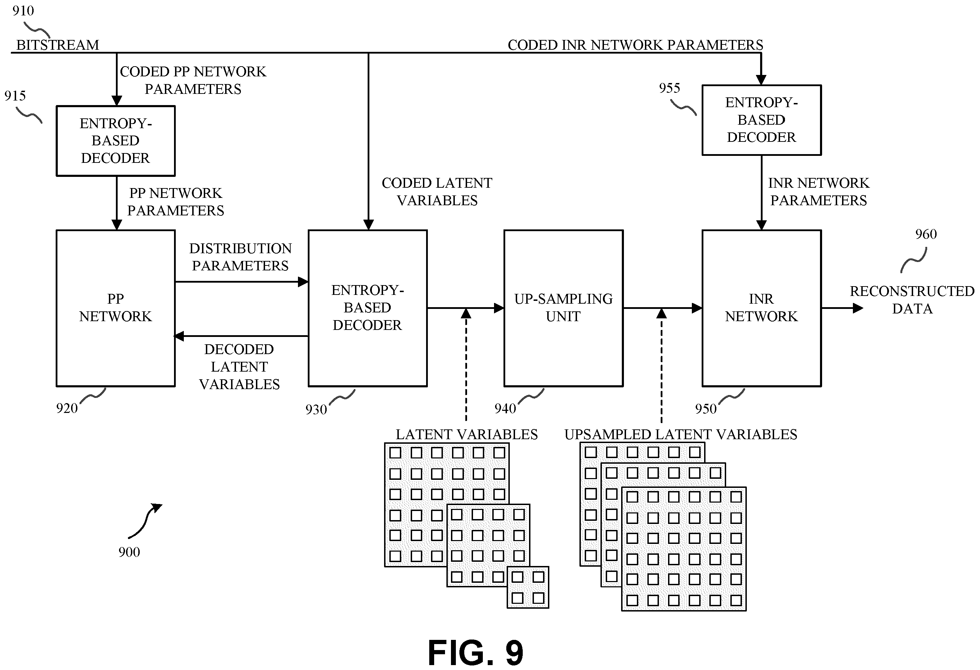

The training may result in the optimal INR network parameters $\Theta$, that may be coded by the entropy-based coder 855 into video data (e.g., the bitstream) 870. FIG. 9 is a flow diagram illustrating an example video decoder that may apply a hybrid INR model. In an example inference mode, reconstructing the data (e.g., by a decoder 900 of FIG. 9) may include feeding the trained INR network, determined (e.g., defined) by the optimal network parameters $\Theta$, with the upsampled latent variable. In addition to the network parameters $\Theta$, the latent variables may be coded into video data (e.g., the bitstream) 870. As described herein, due to their large bit representation, efficient coding of the latent variables may provide the estimation of their distributions. The encoder 800 may be (e.g., further) configured to learn the distributions of respective latent variables using the PP network 820 (e.g., a network trained to produce parameters of distributions of respective latent variables). Based on learned distribution parameters, the entropy-based coder 830 may code the latent variables into video data (e.g., the bitstream) 870.

The PP network 820 may be determined (e.g., defined) by PP network parameters (e.g., denoted by $\psi$, determined during the training of the PP network 820). The entropy-based coder 825 may code PP network parameters into video data (e.g., the bitstream) 870. Note that in the example of FIG. 8, the entropy-based coder 830 that codes the latent variables may rely on learned respective distributions. The other entropy-based coders 825, 855 (e.g., that code the PP network parameters and/or the INR network parameters) may rely on respective non-learned distributions. In examples, respective non-learned distributions may be used by the entropy-based coder 830 for a latent variable. Non-learned distributions may be fixed distributions or may be distributions that are learned with respect to other latent variables (e.g., latent variables representing data from previous frames).

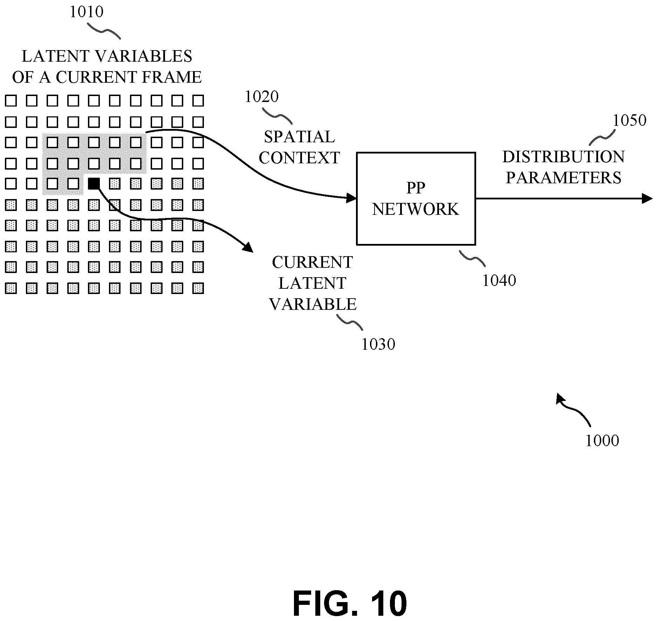

FIG. 9 is a block diagram illustrating an example video decoder applying a hybrid INR network 900. The decoder 900 may include a PP network 920, an up-sampling unit 940, an INR network 950, and/or entropy-based decoders 915, 930, 955. The PP network 920 may produce distribution parameters of respective latent variables. The PP network 920 may operate based on learned PP network parameters $\psi$ (e.g., determined during the training of the PP network 820). The entropy-based decoder 915 may decode PP network parameters from video data (e.g., the bitstream) 910. Based on the produced 920 distribution parameters, the entropy-based decoder 930 may decode the latent variables from video data (e.g., the bitstream) 910. Already decoded latent variables may be provided to the PP network 920, to serve as a context in producing the distribution parameters of the currently decoded latent variable (e.g., as described with reference to FIG. 10). The decoded latent variables may be upsampled by the up-sampling unit 940 (e.g., as performed by the up-sampling unit 840 at the encoder 800). Sent by the up-sampled latent variables, the INR network 950 may reconstruct the data 960 (e.g., a reconstructed image of a video frame) that the INR network 950 is trained to synthesize based on the INR network parameters (e.g., decoded from video data (e.g., the bitstream) 910 by the entropy-based decoder 955).

The hybrid INR network may be described with respect to an image x of a video frame (e.g., in examples x may represent other types of data, such as a surface or a volume), that may be associated with a frame. Latent variables representative of data regions (e.g., pixels) from a data frame (e.g., a video frame) may be referred to herein as corresponding to that data frame.

As illustrated in FIGS. 8 and 9, the INR network 850, 950 may utilize a hierarchical representation that includes one or more layers of different spatial resolutions 810. A layer may represent an image x with a width $W$ and a height $H$ with a corresponding level of detail. The discrete latent variables, denoted by $\hat{y}$, may include $K$ layers of latent variables: $\hat{y} = \{\hat{y}_k, k = 0: (K - 1)\}$. A layer $\hat{y}_k$ may be of width $W/2^k$ and of height $H/2^k$. During the up-sampling 840, a layer $\hat{y}_k$ may be upsampled by a factor of $2^k$ (using a (e.g., any) interpolation method) to obtain the upsampled layer version (e.g., denoted by $\hat{z}_k$). The

upsampled layers, $\hat{z} = \{\hat{z}_k, k = 0: (K - 1)\}$, may result in a dense 3D representation 845 of dimension $W$ by $H$ by $K$. The INR network 850 may be trained based on $W$ by $H$ inputs of $\hat{z}(i, j)$, where an input may include up to $K$ latent variables (e.g., that is, $2(i, j) = \{\hat{z}(i, j, k), k = 0: (K - 1)\}\}$). The trained INR network 950 may be used to predict a reconstructed pixel $\hat{x}(i, j)$, of the original pixel $x(i, j)$, by $\hat{x}(i, j) = f_\theta(\hat{z}(i, j))$. In examples, depending on the desired bitrate, at least one layer (e.g., not all the layers) of the latent variables may be used to represent (e.g., used to code) an image $x$.

Compressing an image $x$ while minimizing a cost function, as discussed with respect to equation (2) may be provided. In the case of a hybrid INR network, the cost of coding an image may be expressed as:

$$Cost = D(x, f_\theta(\hat{z})) + \lambda \times R(\hat{y}, \theta, \psi), \qquad (4)$$

where $x$ may denote an image to be coded with $H$ hight, $W$ width, and/or $F$ color channels. $\hat{y}$ may denote the quantized latent variables and $\hat{z}$ may denote their upsampled version. $f_\theta$ may denote the INR network 850, 950 and $\theta$ may denote the INR network parameters. $f_\psi$ may denote the PP network 820, 920, and $\psi$ may denote the PP network parameters. $D$ may denote a distortion metric measuring the distance between the image $x$ and its reconstructed version $\hat{x}$, as produced by the INR network $f_\theta$ from the upsampled latent variables $\hat{z}$, (e.g., that is, $\hat{x} = f_\theta(\hat{z})$). $R$ may denote the rate (e.g., in bits per pixel) measuring the number of bits that are requested to represent a pixel in a bitstream (e.g., the number of bits that are requested to represent $\hat{y}, \theta$, and/or $\psi$). The distortion $D$ and/or the rate $\beta$ may be balanced by a scalar value denoted by $\lambda$. In examples, where the up-sampling unit 840 is implemented by a neural network, the parameters of the neural network may be learned and/or coded into video data (e.g., the bitstream) 870 (e.g., to be used by the up-sampling unit 940 if/when used in an inference mode).

Determining the latent variables $\hat{y}$, the INR network parameters $\Theta$, and/or the PP network parameters $\psi$ that minimize the coding cost may be as follows:

$$\min_{\hat{y}, \theta, \psi} Cost = \min_{\hat{y}, \theta, \psi} \left( D(x, f_\theta(\hat{z})) + \lambda \times R(\hat{y}, \theta, \psi) \right) \qquad (5)$$

If the contribution of the INR network parameters $\theta$ and/or the PP network parameters $\psi$ to the rate $\beta$ is insignificant compared to (e.g., not as significant as that of) the latent variables $\hat{y}$, then (e.g., only) the latter (e.g., the latent variables) may be considered if/when minimizing the coding cost (e.g., $R(\hat{y}, \theta, \psi) \approx R(\hat{y})$). in examples, $R(\hat{y})$ may be replaced by the cross entropy. In examples, equation (5) may be replaced by:

$$\min_{\hat{y}, \theta, \psi} Cost = \min_{\hat{y}, \theta, \psi} (D \left( x, f_\theta(\hat{z}) \right) - \lambda \times \log_2 P_\psi(\hat{y})), \qquad (6)$$

where $P_\psi(\hat{y})$ may be the joint distribution of the latent variables $\hat{y}$. According to equation (6), minimizing the cost may involve minimizing the rate associated with the latent variables. Minimizing the rate associated with the latent variables may be achieved by reducing the amount of information included in the latent variables (e.g., at the price of a less accurate reconstruction, as less information in $\hat{y}$ may be likely to increase the distortion D). In examples, minimizing the cost may be achieved by obtaining estimates of the distributions of the respective latent variables (e.g., as described herein).

Due to the high dimensionality of the latent variables, modeling of the joint distribution of $\hat{y}$, $P_\psi(\hat{y})$, may not be tractable. Instead, $P_\psi(\hat{y})$ may be factorized as follows:

$$P_\psi(\hat{y}) = \prod_{i,j,k} p_\psi(\hat{y}_{ijk} | c_{ijk}^s), \qquad (7)$$

where $p_\psi(\hat{y}_{ijk} | c_{ijk}^s)$ may denote a discrete conditional probability of a latent variable at position (i, j, k) conditioned on a corresponding spatial context $c_{ijk}^s$. Where (i, j) may represent the spatial coordinate of a latent variable in a layer k. The spatial context $c_{ijk}^s$ may be provided by spatially neighboring latent variables that may have been (e.g., may have already been) decoded, and/or preferably selected in a way that enables parallel decoding of the different layers of the latent variables (e.g., in a wavefront-like approach).

In examples, the discrete distribution $p_\psi(\hat{y}_{ijk} | c_{ijk}^s)$ may be modeled by integrating the continuous distribution of the non-quantized latent variable, denoted by $g(y)$ and/or modeled as a Laplacian distribution. The PP network 820 may learn the expectation parameter, $\mu_{ijk}$, and/or the scale parameter, $\sigma_{ijk}$, based on the context $c_{ijk}^s$. Accordingly, the probability of a latent variable $\hat{y}_{ijk}$ may be expressed as:

$$p_\psi(\hat{y}_{ijk}|c_{ijk}) = \int_{\hat{y}_{ijk}-0.5}^{\hat{y}_{ijk}+0.5} g(y)dy, \tag{8}$$

where $g \cong \mathcal{L}(\mu_{ijk}, \sigma_{ijk})$ may denote a Laplacian distribution. In examples including a Laplacian distribution for $c_{ijk}$, the PP network 820 may be trained to produce the corresponding distribution parameters, $\{\mu_{ijk}, \sigma_{ijk}\} = f_\psi(c_{ijk})$ (e.g., as described with reference to FIG. 10).

FIG. 10 is a diagram illustrating an example of a prediction of a latent variable distribution using a spatial context 1000. Although FIG. 10 depicts one layer of the latent variables 1010, features described herein may be applied to the other layers (e.g., multiple layers). FIG. 10 illustrates an example of predicting a distribution of a current latent variable (e.g., indicated by a black square) to be coded (e.g., by encoder 800 or 1100) or to be decoded (e.g., by decoder 900 or 1200). if/when coding the latent variable, neighboring latent variables from the current frame may be available. if/when decoding the latent variable, one or more of the neighboring latent variables from the current frame may not be (e.g., yet) available (e.g., decoded). The neighboring latent variables may be indicated by the white squares (e.g., available latent variables) and/or the patterned squares (e.g., not yet available latent variables).

As illustrated in FIG. 10, a spatial context 1020 may be constructed based on the latent variables in the spatial neighborhood of the current latent variable 1030. For a current latent variable at position $(i, j, k)$, latent variables may be selected within a neighborhood located relative to position $(i, j, k)$ (e.g., latent variables grouped by the gray background in FIG. 10) to form the spatial context $c_{ijk}^s$. The obtained spatial context, $c_{ijk}^s$, may be used by the PP network 1040 to predict the distribution of the current latent variable. The distribution of the current latent variable may be predicted by estimating the parameters of that distribution (e.g., $\{\mu_{ijk}, \sigma_{ijk}\}$).

In the encoder, the PP network 1040 may be trained to produce (e.g., for a (e.g., each) latent variable), the distribution parameters 1050 based on the respective spatial context. Training may be performed by minimizing the coding cost expressed in equation (6). The training of the PP network 1040 may result in the PP network parameters $\psi$. In the decoder, the trained PP network 1040 may be operated in an inference mode to produce, for a (e.g., each) latent variable, the distribution parameters 1050 from the respective spatial context. The trained PP network 1040 may operate based on the PP network parameters $\psi$ determined by the encoder during training and/or provided to the decoder in video data (e.g., the bitstream).

In examples (e.g., of a video stream), a hybrid INR network may be used to represent an (e.g., each) image of a video frame by a set of latent variables, $\hat{y}$, that (e.g., together with the PP network parameters $\psi$ and/or the INR network parameters $\theta$) may be coded into a bitstream. To decrease the bitrate of the compressed video, the set of latent variables may be trained to represent a group of video frames. Training a set of latent variables to represent a group of video frames may make it difficult to randomly access individual frames at the decoder. A predictive hybrid INR network applicable to individual frames may be described herein.

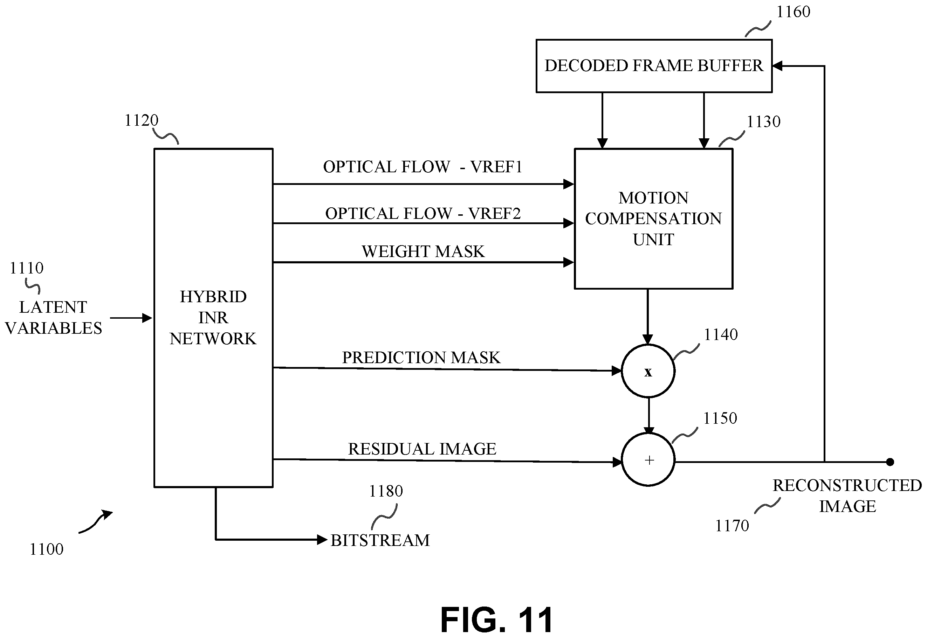

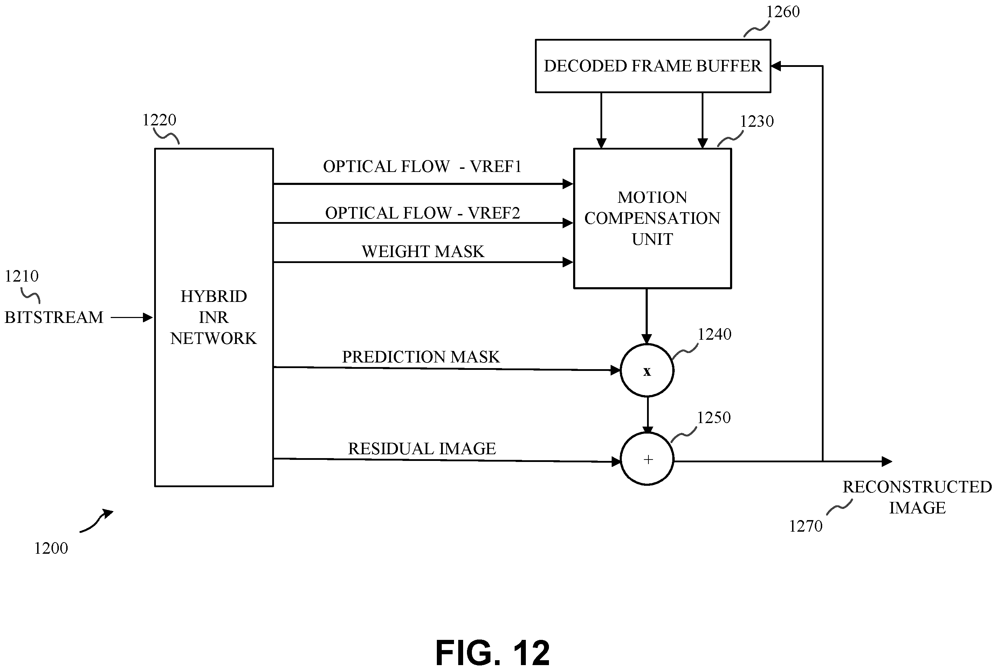

A predictive hybrid INR network may be described with reference to FIGS. 11 and/or 12. The predictive hybrid INR network may be explained herein with respect to an image x of a video frame (e.g., however, x may represent other types of data, such as a surface or a volume) that may be associated with a frame. Latent variables representative of data regions (e.g., pixels) from a data frame (e.g., a video frame) may be referred to herein as corresponding to that data frame.

FIG. 11 is a block diagram illustrating an example video encoder 1100 applying a predictive hybrid INR network. The encoder 1100 may receive, as an input, latent variables 1110 and/or output video data (e.g., a bitstream) 1180. The encoder 1100 may include a hybrid INR network 1120, a motion compensation unit 1130, a multiplier 1140, an adder 1150, and/or a decoded frame buffer 1160. The hybrid INR network 1120 may be (e.g., in a training mode) a hybrid INR network as described with reference to FIG. 8.

In examples, the hybrid INR network 1120 may be trained to produce at least two (e.g., two) optical flows, $v_{ref1}$ and $v_{ref2}$, a weight mask $\beta$, a prediction mask oc, and/or a residual image $r$. The optical flows may represent the pixel-wise motion between respective reference frames (e.g., already reconstructed images 1170, stored in the decoded frame buffer 1160) and/or the current frame. The motion compensation unit 1130 may use optical flows to generate a prediction (e.g., denoted by $\tilde{x}$), of an image x (e.g., the currently coded image x), as follows:

$$\tilde{x} = \beta \times warp(\hat{x}_{ref1}, v_{ref1}) + (1-\beta) \times warp(\hat{x}_{ref2}, v_{ref2}), \tag{9}$$

where *warp* may be an operator that warps (e.g., spatially maps) an image into another image based on motion vectors given by an optical flow. In examples, a first reference image, $\hat{x}_{ref1}$, may be warped into a first prediction, $\tilde{x}_1 = warp(\hat{x}_{ref1}, v_{ref1})$ and/or a second reference image, $\hat{x}_{ref2}$ may be warped into a second prediction, $\tilde{x}_2 = warp(\hat{x}_{ref2}, v_{ref2})$. Using elementwise multiplication, denoted by "$\cdot$", the two predictions may be blended by the mask $\beta$, yielding the prediction image $\tilde{x}$. As illustrated in FIG. 11, the prediction image $\tilde{x}$ (e.g., an output of the motion compensation unit 1130) may be corrected by the residual image r, as follows:

$$\widehat{x} = r + \propto \times \widetilde{x},\qquad\qquad(10)$$

where, the prediction mask oc may be a binary mask that may be used to mask out 1140 a prediction pixel if the prediction mask does not reliably predict the corresponding pixel in *x*. Adding 1150 the masked prediction image, $\infty \cdot \tilde{x}$, to the residual image r produces the reconstructed image 1170, $\hat{x}$.

The at least two (e.g., two) optical flows, $v_{ref1}$ and $v_{ref2}$, the weight mask $\beta$, the prediction mask oc, and/or the residual image r may be learned by minimizing the coding cost expressed in equation (4), where $f_\theta(\hat{z}) = \hat{x} = r + \infty \cdot \tilde{x}$. The predictive hybrid INR network (e.g., as illustrated in FIG. 11), may be applied using a (e.g., only one) reference image or a number of reference images available in the decoded frame buffer 1160. In examples, equation (9) may be expressed as:

$$\widetilde{x} = \sum_{q=1}^{Q} \beta_q \times warp(\widehat{x}_{refq}, v_{refq}),\qquad\qquad(11)$$

where Q may be the number of reference images used. $\sum_{q=1}^{Q} \beta_q$ may be equal to a matrix (e.g., an all-ones matrix). $v_{refq}$ may be the optical flow with respect to $\hat{x}_{refq}$, (e.g., the $q^{th}$ reference image). In examples, the weight mask $\beta$, and/or the prediction mask oc, may be removed from the predictive hybrid INR network 1120.

FIG. 12 is a block diagram illustrating an example video decoder 1200 applying a predictive hybrid INR network 1220. The decoder 1200 may receive, as an input, video data (e.g., a bitstream) 1210 and/or output a reconstructed image 1270. The decoder 1200 may include a hybrid INR network 1220, a motion compensation unit 1230, a multiplier 1240, an adder 1250, and/or a decoded frame buffer 1260. The hybrid INR network 1220 may be (e.g., in an inference mode) a hybrid INR network as described in reference to FIG. 9. In examples, the hybrid INR network 1220 may produce at least two (e.g., two) optical flows, $v_{ref1}$ and $v_{ref2}$, a weight mask $\beta$, a prediction mask oc, and/or a residual image *r*. The at least two optical flows may represent the pixel-wise motion between respective reference frames (e.g., already reconstructed images 1270, stored in the decoded frame buffer 1260) and/or the current frame. The motion compensation unit 1230 may use the at least two optical flows to generate a prediction (e.g., denoted by $\tilde{x}$), of the currently decoded image x, as expressed by equation (9). As illustrated in FIG. 12, the prediction image $\tilde{x}$ (e.g., output of the motion compensation unit 1230) may be corrected by the residual image *r,* as shown by equation (10). Adding 1250 the masked prediction image, $\infty \cdot \tilde{x}$, to the residual image *r* may produce the reconstructed image 1270, $\hat{x}$.

In example parts of a signal, such as low-spatial frequency parts, high resolution latent grids may include little to no information. Encoding latent values including little to no information may lead to unnecessary rate increases and/or to unnecessary computations for decoding.

Examples described herein may reduce (e.g., restrict and/or limit) the number of latent values if/when such latent values do not bring an (e.g., any) added values in terms of quality of experience (QoE). A restriction and/or limitation may improve the training process and/or may include a positive effect on a bitrate.

Examples described herein may reduce the unnecessary rate increase and/or encoding/decoding computation by locally disabling a latent value.

An encoding and/or a corresponding decoding procedure for hybrid-INR may be described herein.

An example hybrid INR encoder algorithms may be provided herein.

If a set of hierarchical latent variables are used, examples described herein may disable (e.g., some) latent values (e.g., by performing a prior analysis of the contributions of the latent values in a coarse-to-fine approach). Examples described herein may guide the training to put more or less emphasis on a subset of latent variables (e.g., more emphasis on a second portion of a plurality of latent variables rather than a first portion of a plurality of latent variables).

Examples described herein may be based on one or more (e.g., important) factors such as QoE, bitrate, and/or rate/distortion tradeoff. Examples described herein may be performed prior to and/or or during the training procedure. Examples described herein may rely on the generation of a mask based on a Laplacian pyramid, a just noticeable differences (JND), and/or a saliency map. A mask may be transmitted (e.g., in video data) to decrease the decoding time and/or complexity. Examples described herein may decrease the bitrate and/or the decoding complexity of a signal using feature-based and/or hybrid INR examples. Examples may be described with reference to a 2D video, however this is not mean to be limiting (e.g., features described herein may be applicable to 3D images, holographic images, and/or the like).

Determining in a pre-analysis operation whether to evaluate the contribution of latent values to the reconstruction of the final image may be described herein (e.g., determining a latent variable mask). In examples (e.g., for a smooth area), a (e.g., only one) latent value may be requested (e.g., may be required) to reconstruct an area (e.g., a smooth area). Refinements for an area (e.g., a smooth area) may not be requested (e.g., are not required) leading to the disabling of higher-level latent values (e.g., disabling a first portion of a plurality of latent variables). Examples described herein may save bitrate, save decoding operations, and/or ease the training stages.

The input image x to encode may include a resolution of $W \times H.$ The discrete latent variables, denoted by $\hat{y}$, may include K layers of latent variables: $\hat{y} = \{\hat{y}_k, k = 0: (K - 1)\}$. A (e.g., each) layer $\hat{y}_k$ may be of width $W/2^k$ and of height $H/2^k$. The discrete mask, denoted by m, may include the same and/or similar number of layers and/or the same and/or similar resolution of the discrete latent variable: m = {$m_k$, k = 0: (K - 1)}. A (e.g., each) layer $m_k$ may be of width $W/2^k$ and of height $H/2^k$. The mask may be binary (e.g. including 0 or 1). In examples, a first portion (e.g., nontrainable) of a plurality of latent variables may be disabled if a first value is a 0. In examples, a second portion (e.g., trainable) of a plurality of latent variables may be enabled if a first value is a 1 (e.g., a value of a latent variable mask).

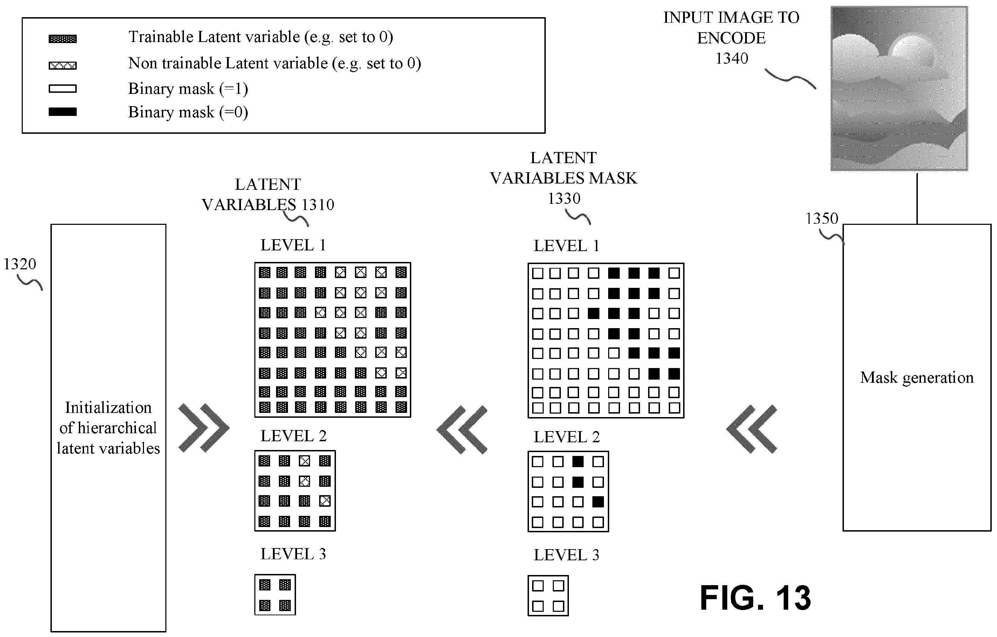

FIG. 13 is a diagram illustrating a pre-analysis example. The discrete latent variables (1310) may be arranged in a hierarchical manner. The discrete latent variables (1310) may be initialized (1320) (e.g., zero value). The depth corresponding to the number of layers (or levels) may be pre-determined (e.g., *K).* The input image (1340) may be analyzed to output a hierarchical binary mask m having the same depth as the latent variables. The mask generation may be performed by (1350). Computing a mask may be described herein (e.g., Laplacian pyramid, JND, and/or binary saliency maps).

If the hierarchical latent variables and/or the hierarchical mask are determined (e.g., defined), a point-wise equation may be applied per level as follows:

$$\hat{y}_k \leftarrow \hat{y}_k \otimes m_k,$$

where k = 0: (K - 1), where $\otimes$ may be a point-wise multiplication. In examples, if/when the mask variable is equal to 1, no modifications may be made on the hierarchical discrete latent variables (e.g., second portion of a plurality of the latent variables may be trainable by an INR network). In examples, if/when the mask variable is equal to 0, the discrete latent variable may be set to zero and/or may be disabled (e.g., meaning that the discrete latent variable (e.g., a first portion of a plurality of latent variables) may not be trainable, or may not be trained further).The modified hierarchical discrete latent variables may be used by the encoder (e.g., to train the INR network).

Examples described herein may not impact one or more functions associated with encoding and/or decoding. Video data (e.g., the bitstream) may not be changed if/when considering an example hybrid INR codec. Encoding and/or decoding operations may be described herein.

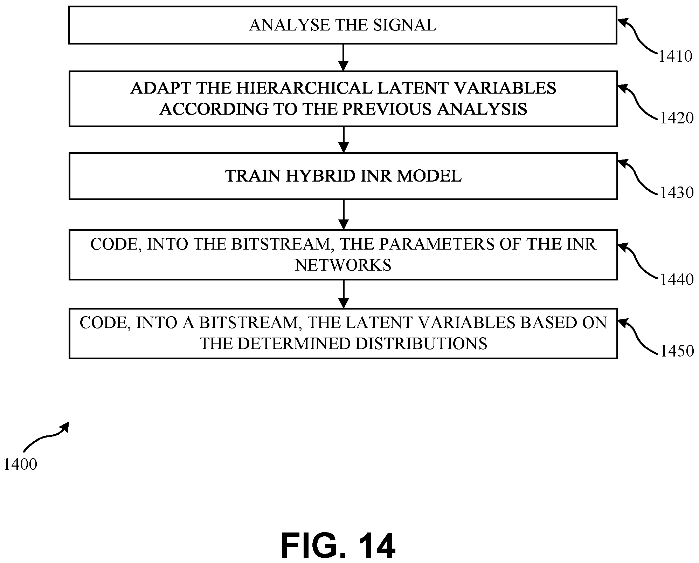

FIG. 14 is a flow diagram illustrating an example encoding routine 1400. In examples, an encoding algorithm (e.g., routine 1400) may be used to encode a signal. The algorithm (e.g., routine 1400) may be illustrated in FIG. 14.

At 1410, the signal (e.g., a frame, an image) may be analyzed and a hierarchical binary mask may be determined. The hierarchical mask may include similar properties as the hierarchical discrete latent variables (e.g., depth and/or resolution).

At 1420, adaptation of the hierarchical latent variables by using the hierarchical masks may be performed. A point-wise multiplication may be performed between the hierarchical discrete latent variables and the hierarchical masks. Discrete latent variables for which the binary mask value is 0 may be set to 0 (e.g., indicating that the discrete latent variables (e.g., a first portion of a plurality of latent variables) are not trainable and/or may not be trained more).

At 1430, a hybrid INR model may be trained. The hybrid INR model may be trained by considering the modified latent variables (e.g., by applying the modified latent variables to the training model). The modified latent variables may include a first portion (e.g., also referred to herein as the nontrainable latent variable, disabled latent variable, masked latent variable, and/or the like) and/or a second portion (e.g., a trainable portion) of the plurality of latent variables. The hybrid INR model may be trained using the modified latent variables. In examples, the INR model may be trained by applying a second portion of a plurality of latent variables (e.g., trainable latent variables) to the INR model, and/or by applying a default value, for the masked latent variables, to the INR model (e.g., applying a default value to the hybrid INR model, in place of the disabled and/or masked latent variables). In examples, a hybrid INR model may be trained based on the trainable latent variables and the zeroed out latent variables (e.g., by training the INR network with a default value for the zeroed out latent variables). The full INR model may be trained using the synthesis network, the latent values (e.g., default values associated with disabled latent variables and/or the trainable latent variables), and/or the autoregressive model (e.g., or other model), yielding a probability distribution over the latent values. In examples, the trainable latent variables may be refined by the INR model as part of the training. In examples, a network parameter may be determined as part of the training (e.g., based on the trainable latent variables).

At 1440, the hybrid INR parameters may be encoded. The neural network (e.g., probability model, synthesis model and/or upsampling model) may be encoded in a bitstream. If the model involves a neural network, the parameters may be encoded by, for example, a neural compression codec and/or by quantizing the weights and/or pruning neurons from the network.

At 1450, the latent values may be coded by an entropy coder. The latent values may be coded based on the discrete probability distribution over the quantized latent features (e.g., given by the autoregressive model, or another model). Coding the latent values may involve quantization of the latent features (e.g., if the latent values have not been quantized before).

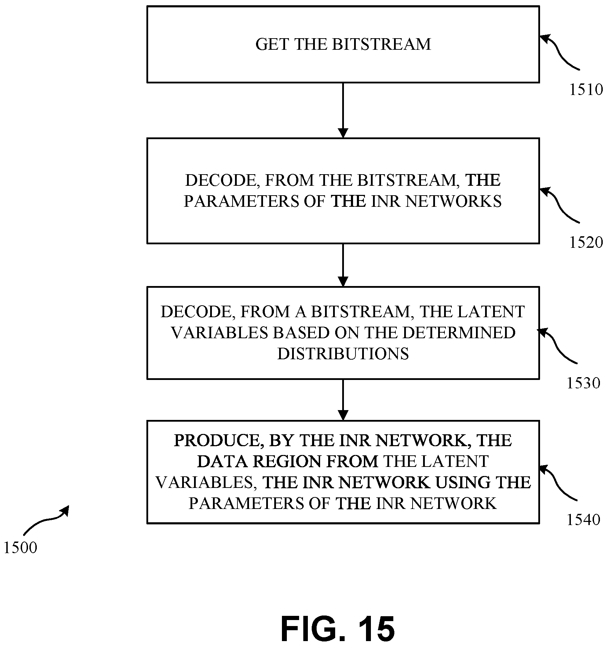

FIG. 15 is flow diagram illustrating an example decoding routine 1500. The resulting bitstream (e.g. as a result of 1450 and/or the like) may be decoded to (e.g., to first) decode the latent features.

At 1510, video data (e.g., the bitstream) may be received. At 1520, the auto-regressive and/or other probability model may be obtained. The model may be decoded from video data (e.g., the bitstream). The model may be reused (e.g., from another frame and/or the like).

At 1530, latent values may be decoded from video data (e.g., the bitstream), using the auto-regressive or other probability model, and/or an entropy decoder (e.g., as in a hybrid INR example as described herein).

At 1540, one or more latent features may be used to decode the signal (e.g., following an example for hybrid INR models as described herein). The decoded latent features may be upsampled. Upsampling may include (e.g., require) obtaining an upsampling network from video data (e.g., the bitstream).

The synthesis network may be obtained. Obtaining the synthesis network may include decoding it (e.g., the synthesis network) from video data (e.g., the bitstream). The synthesis network may be (e.g., already be) available to the decoder (e.g., because it may have been used for another part of the signal or may be transmitted separately).

The upsampled features may be used by the synthesis network to decode the signal. In examples (e.g., including 2D images and/or video), the output of the synthesis network may be pixel colors. In examples (e.g., including 3D scenes), the output may be color and/or density of a voxel. In examples (e.g., including a 3D surface (e.g., a hologram)), the output may be a signed and/or unsigned distance to the surface.

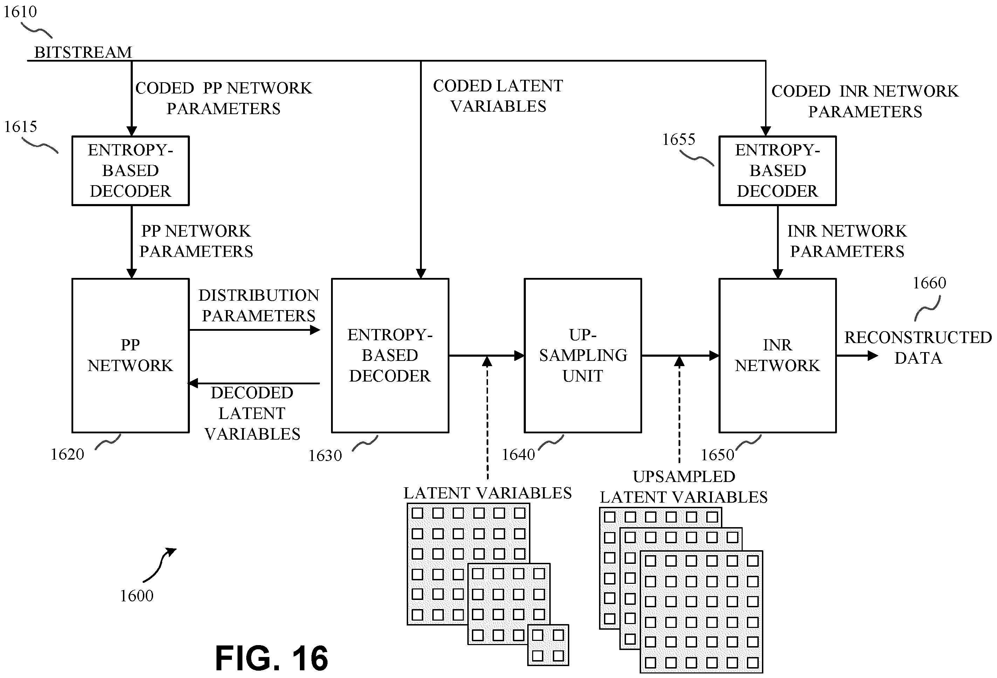

In examples, the decoded latent features may be used to decode the signal as in an example hybrid INR algorithm. An example using a hybrid INR algorithm may be illustrated with reference to FIG. 16.

FIG. 16 is a flow diagram illustrating an example decoder 1600 that may use a hybrid INR algorithm. The decoder 1600 may include a PP network 1620, an up-sampling unit 1640, an INR network 1650, and/or entropy-based decoders 1615, 1630, 1655. The PP network 1620 may produce distribution parameters of respective latent variables. The PP network 1620 may operate based on learned PP network parameters $\psi$ (e.g., determined during the training of the PP network 820). The entropy-based decoder 1615 may decode PP network parameters from video data (e.g., the bitstream) 1610.

Based on the distribution parameters (e.g., generated via PP network 1620), the entropy-based decoder 1630 decodes the identified latent variables from video data (e.g., the bitstream) 1610. Decoded (e.g., already decoded) latent variables may be provided (e.g., back) to the PP network 1620. The decoded latent variables provided to the PP network 1620 may serve as a context in producing the distribution parameters of the currently decoded latent variable (e.g., as described with reference to FIG. 10).

The decoded latent variables may be upsampled by the up-sampling unit 1640 (e.g., as performed by the up-sampling unit 840 at the encoder 800). Received from (e.g., fed by) the up-sampled latent variables, the INR network 1650 may reconstruct the data 1660 (e.g., a reconstructed image of a video frame) that the INR network 1650 is trained to synthesize (e.g., based on the INR network parameters). The INR network parameters may be decoded from video data (e.g., the bitstream) 1610 by the entropy-based decoder 1655.

Mask generation and/or applying the mask prior to training may be described herein.

Computing the mask m = {$m_k$, k = 0: (K - 1)} for which a (e.g., each) layer $m_k$ may be of width $W/2^k$ and of height $H/2^k$ is described herein. The mask may be computed based on a Laplacian pyramid, based on JND, and/or based on binary saliency maps.

A mask may be computed based on a Laplacian pyramid. The human visual system may be less sensitive to distortions in high frequencies. In image compression, high frequencies may be less perceptually relevant for the human visual system. High frequencies may be removed (e.g., are commonly removed) by applying a higher quantization operation to the highest frequencies.

Removing iteratively (e.g., on a pixel basis), the less important latent variables in a fine-to-coarse manner based on the Laplacian pyramid decomposition, and/or based on a determination that the highest frequencies are less perceptually relevant may be described herein.

A discrete latent variable may follow a Laplacian pyramid decomposition. Pruning of the latent variables by using a Laplacian decomposition of the input image may be derived.

A Laplacian pyramid may be described herein.

A Laplacian pyramid may be a linear invertible image representation including a set of layers (e.g., p= {$p_k$, k = 0: (K - 1)}). A (e.g., each) layer $p_k$ may be of width $W/2^k$ and/or of height $H/2^k$. The layer $K$ - 1 may represent a resolution and gather a spatial frequency (e.g., the lowest resolution and gather the lowest spatial frequencies). Other sub-bands may gather increasing spatial frequencies (e.g., given that the highest frequencies are present in the layer 0).

To build the Laplacian pyramid of the input $x$, a Gaussian pyramid $g$ = {$g_k$, k = 0: (K - 1)}, may be computed (e.g., determined), where $g_0$ may be the input image and/or the following layers k = 1: (K - 1) may be obtained by down sampling the layer $g_0$ by a factor $2^k$ in one or more (e.g., both) directions.

From the Gaussian pyramid and starting from the lowest level $k = K$ - 1, the layer $k$ of the Laplacian pyramid may be obtained by calculating (e.g., taking) the difference between adjacent levels in the Gaussian pyramid. A level of the Laplacian pyramid (e.g., the lowest level of the Laplacian pyramid) may be a level of a Gaussian pyramid (e.g., the lowest level of a Gaussian pyramid):

$$p_{K-1} = g_{K-1}$$

and/or

$$p_k(x, y) = g_k(x, y) - upsampling\big(g_{k+1}(x, y)\big),$$

for k = 0: *(K - 2)* where (*x, y*) may be the spatial coordinates. A (e.g., each) level may include (e.g., capture) the image structure present at a scale (e.g., at a particular scale).

Collapse for reconstructing the original image may be described herein.

Reconstruction of the original input image from a Laplacian pyramid may be performed using the backward recurrence:

$$\boldsymbol{x}_k = upsampling(\boldsymbol{x}_{k+1}) + p_k,$$

fork = 0:(K-2)

$$\boldsymbol{x}_k = p_k,$$

for *k* = K - 1

The reconstructed original image may be $x = x_0$.

Determining if/whether the latent variable $\hat{y}_k(x, y)$ at the level k and/or located at the spatial coordinates (*x, y*) may be masked by setting $m_k(x, y) = 0$, without compromising (e.g., too much) the global quality may be described herein.

For a discrete latent variable located at (*x,y*), the Laplacian coefficient $p_k(x, y)$ may be discarded, and/or $m_k(x, y) = 0$, and/or the modified image may be reconstructed $\hat{x}$, by collapsing the Laplacian pyramid. The difference $\delta$ between the original image and the modified image may be computed as follows:

$$\delta(x, y) = \boldsymbol{x}(x, y) - \widehat{\boldsymbol{x}}(x, y)$$

In examples, for a (e.g., each) Laplacian coefficient, a (e.g., hard) thresholding may be used as follows:

$$\mathrm{m}_k(x, y) = 0, \text{ if } |\delta(x, y)| < \alpha_k \text{ if/when } p_k(x, y) = 0$$

where, $\alpha_k$ may be a predefined threshold determined (e.g., defined) for the level k. A determination (e.g., definition) of a set of thresholds per level $\alpha = \{\alpha_k, k = 0: (K - 1)\}$ may be included. One or more strategies for determining a threshold may be described herein.

In examples, the thresholds may be the same for one or more (e.g., all) levels. For example:

$$\alpha_k = 0.2, \forall k = 0: (K - 1)$$

In examples, the thresholds may decrease with increasing depth: $\alpha_0 > \alpha_1 > \cdots > \alpha_{K-1}$ Iterating from the highest to the lowest levels may be described.

In examples, for a (e.g., each) Laplacian coefficient and/or from the highest to the lowest levels, the threshold may be adjusted to reach a target of quality (e.g., a peak signal-to-noise ratio (PSNR)).

For (e.g., all) Laplacian coefficients (e.g., starting from the highest layer, *k* = 0), an iteration over (e.g., all) coefficients with a (e.g., hard) threshold using an adjusted threshold may be performed. An example pseudo-code may be provided:

A layer may be processed, *k* = 0.
$\alpha_k$ may be set to a value.
The quality target may be set. (e.g., if the PSNR is used, a target may be, for example, 40dB although the target may be higher and/or lower).
If (e.g., while) the quality target is not reached:

For coefficients of the Laplacian layer:

$$\mathrm{m}_k(x,y) = 0, \text{if } |\delta(x,y)| < \alpha_k \text{ if/when } p_k(x,y) = 0$$

If (e.g., while) the quality target is not reached, the Laplacian pyramid may be collapsed to obtain the modified image.

The quality may be computed (e.g., PSNR, between the original and modified image). If the quality target (e.g., PSNR), is reached, the example may end.

If the quality target is not reached, the threshold $\alpha_k$ may be increased (e.g., by a factor greater than 1, such as 1.05). The example may continue.

If the (e.g., all) Laplacian coefficients are null and/or the quality target is not reached, the (e.g., next) layer $k = k + 1$ may be processed.

A mask may be computed based on JND. For an image, the mask may be determined (e.g., defined) by computing and/or leveraging a pre-computed JND map. By configuring one or more settings (e.g., by setting an appropriate setting), the map may be binarized and/or used map to mask and/or to discard latent values (e.g., that include a low JND value). A binary JND map may be applied over one or more levels (e.g., except on the lowest level that includes the minimal viable information to reconstruct the image). A JND map may be computed as described herein.

A mask may be computed based on a binary saliency map. For an image, the mask may be determined (e.g., defined) by computing and/or binarizing a pre-computed saliency map. A binary saliency map may be used to mask and/or to discard latent variables of non-salient areas. The binary saliency map may be applied over one or more levels (e.g., except on the lowest level that includes the minimal viable information to reconstruct the image). A mask computed based on a binary saliency map may be configured for a (e.g., well-tailored to a very) low bit rate context. A saliency map may be computed as described herein.

A mask may be generated and/or applied during a training.

One or more examples may not be optimal if the rate/distortion tradeoff is considered. If a (e.g., valued) mask is generated (e.g., computed) by using JND and/or a saliency map, the loss function may be modified. if/when compressing an image x, an optimal outcome may be to minimize a cost function (e.g., while compressing the image x). In examples including a hybrid INR network, the cost of coding an image may be expressed as:

$$Cost = D(\boldsymbol{x}, \widehat{\boldsymbol{x}}) + \lambda \times R$$

where x and x̂ may denote an image to be coded (e.g., with H hight, W width), and the coded image, respectively.

The distortion D and/or the rate β may be balanced by a scalar value denoted by $\lambda$. Less of an emphasis may be placed on one or more locations by modifying the computation of the distortion as follows:

$$D(\boldsymbol{x}, \widehat{\boldsymbol{x}}) = \frac{1}{H \times W} \sum_{ij}^{[H,W]} \left( x(i,j) - \hat{x}(i,j) \right)^p \times M(i,j)$$

where M may be a pixel-wise map in a range (e.g., a range of [0,1]). In examples, 0 may indicate that the distortion is ignored (e.g., does not matter on a location) and/or 1 may indicate that the distortion is not ignored (e.g., at the location and/or may be fully considered).

The pixel-wise map M may be determined (e.g., defined) by a JND and/or a saliency map. The mask may be transmitted to decrease the decoding complexity.

In examples, the mask may not have been transmitted. Transmission of the mask may be considered to decrease the decoding complexity.

The masked latent variables may not be decoded (e.g., a default value may be indicated based on a latent variable mask determined based on a Laplacian pyramid, JND, and/or a saliency map, as described herein). In examples, the masked latent variables may be encoded by the entropy encoder (e.g., entropy coding) and/or decoded by the entropy decoder.

At the encoder, if/when a latent variable is masked, the entropy coding may use one or more (e.g., predefined) parameters. For example, if a Gaussian or Laplacian distribution is used, the average and/or the standard deviation may be null.

At the decoder side, the decoding of masked latent variables (e.g., which are indicated by the transmitted mask) may be omitted (e.g., skipped).

Learning based compression may be described herein. Examples described herein may provide a (e.g., far) lower computational complexity than end-to-end neural compression examples.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

> i. Encoding, into coded video data, syntax elements that can enable the decoder to decode the coded video data, according to any of the embodiments described herein.
>
> ii. Video data (e.g., a bitstream) that may include one or more of the described syntax elements, or variations thereof, whether transmitted, stored, or otherwise made available.
>
> iii. Creating, transmitting, receiving, and/or decoding of the bitstream.
>
> iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A device for video encoding, comprising:
a processor configured to:

obtain a plurality of latent variables associated with an image;
identify a first portion of the plurality of latent variables and a second portion of the plurality of latent variables;
determine an implicit neural representation (INR) network parameter based on the second portion of the plurality of latent variables; and
encode the image based on the second portion of the plurality of latent variables and the INR network parameter.

2. The device of claim 1, wherein the processor is further configured to:

generate a latent variable mask by analyzing the image; and

apply the latent variable mask to the plurality of latent variables to identify the first portion of the plurality of latent variables and the second portion of the plurality of latent variables.

3. The device of claim 1 or 2, wherein the processor is further configured to:

modify the plurality of latent variables by applying a default value to the first portion of the plurality of latent variables; and
train an INR network based on the modified plurality of latent variables, wherein the INR network parameter is determined based on the trained INR network.

4. The device of any one of claims 1-3, wherein the processor is further configured to:
generate a latent variable mask based on a Laplacian pyramid, a just noticeable differences (JND) map, or a binary saliency map associated with the image.

5. The device of any one of claims 1-4, wherein the processor is further configured to:

disable the first portion of the plurality of latent variables for training an INR network; and
use the second portion of the plurality of latent variables for training the INR network, wherein the INR network parameter is determined based on the trained INR network.

6. The device of any one of claims 1-5, wherein the processor is further configured to include an indication of the latent variable mask in video data.

7. The device of any one of claims 1-6, wherein the processor is further configured to:
identify the first portion or the second portion of the plurality of latent variables based on a condition that a quality of experience (QoE) associated with a spatial coordinate of the image satisfies a threshold.

8. The device of any one of claims 1-7, wherein the processor is further configured to:

provide the second portion of the plurality of latent variables to an INR network; and
obtain, based on the INR network, a refined second portion of the plurality of latent variables, wherein the INR network parameter is determined based on the refined second portion of the plurality of latent variables.

9. The device of claim 8, wherein the processor is further configured to:
include an indication of the refined second portion of the plurality of latent variables in video data.

10. The device of any one of claims 1-9, wherein the processor is further configured to include an indication of the second portion of the plurality of latent variables and an indication of the INR network parameter in video data.

11. A device for video decoding, comprising:
a processor configured to:

obtain, from video data, an indication of a portion of a plurality of latent variables associated with an image being disabled;
infer a first portion of the plurality of latent variables based on the indication;
obtain, from the video data, a second portion of the plurality of latent variables associated with the image; and
decode the image based on an implicit neural representation (INR) network and the plurality of latent variables having the first portion and the second portion of the plurality of latent variables.

12. The device of claim 11, wherein the processor is further configured to:

infer a default value associated with the first portion of the plurality of latent variables;
apply the default value associated with the first portion of the plurality of latent variables to the INR network; and
generate a prediction of the image based on the first portion having the default value and the second portion of the plurality of latent variables.

13. The device of claim 11 or 12, wherein the processor is further configured to:

identify the first portion of the plurality of latent variables based on the indication of the portion of a plurality of latent variables associated with an image being disabled; and

skip decoding the first portion of the plurality of latent variables.

14. The device of any one of claims 11-13, wherein the indication of a portion of a plurality of latent variables is configured to indicate a latent variable mask in video data, and wherein the processor is further configured to:

identify the first portion of the plurality of latent variables and the second portion of the plurality of latent variables based on the latent variable mask.

15. The device of claim 14, wherein the processor is further configured to:

based on a first condition that the latent variable mask indicates that a latent variable associated with a spatial coordinate is enabled, apply a latent variable to the INR network; and

based on a second condition that the latent variable mask indicates that the latent variable associated with the spatial coordinate is disabled, apply a default value to the INR network.

FIG. 1

100

105 — RF / COMP / USB / HDMI

110 — PROCESSOR

120 — MEMORY

130 — ENCODER/DECODER

140 — STORAGE DEVICE

150 — COMMUNICATION INTERFACE

160 — DISPLAY INTERFACE

170 — AUDIO INTERFACE

180 — PERIPHERAL INTERFACE

165 — DISPLAY DEVICE

175 — AUDIO DEVICE

185 — PERIPHERALS

115

190 — COMMUNICATION CHANNEL

FIG. 2

**FIG. 3**

EP 4 765 812 A1

**FIG. 4**

EP 4 765 812 A1

510

INPUT DATA

520

INR-BASED
ENCODER

530

QUANTIZER

540

ENTROPY-BASED
ENCODER

550

BITSREAM

**FIG. 5**

500

610

BITSTREAM

620

ENTROPY-BASED
DECODER

630

DEQUANTIZER

640

INR-BASED
DECODER

650

RECONSTRUCTED
DATA

**FIG. 6**

600

EP 4 765 812 A1

DATA COORDINATES → MAPPING UNIT (720) → LATENT VARIABLES (725) → UP-SAMPLING UNIT (730) → UPSAMPLED LATENT VARIABLES (735) → INR NETWORK (740) → RECONSTRUCTED DATA (750)

710 — DATA COORDINATES

700

**FIG. 7**

**FIG. 8**

EP 4 765 812 A1

**FIG. 9**

EP 4 765 812 A1

1010

LATENT VARIABLES
OF A CURRENT FRAME

1020

SPATIAL
CONTEXT

PP
NETWORK

1050

DISTRIBUTION
PARAMETERS

1040

CURRENT
LATENT
VARIABLE

1030

1000

**FIG. 10**

EP 4 765 812 A1

**FIG. 11**

**FIG. 12**

INPUT IMAGE TO ENCODE 1340

Mask generation

1350

LATENT VARIABLES MASK 1330

LEVEL 1

LEVEL 2

LEVEL 3

LATENT VARIABLES 1310

LEVEL 1

LEVEL 2

LEVEL 3

Initialization of hierarchical latent variables

1320

Trainable Latent variable (e.g. set to 0)

Non trainable Latent variable (e.g. set to 0)

Binary mask (=1)

Binary mask (=0)

**FIG. 13**

```
┌─────────────────────────────────────────────────────────────┐
│                    ANALYSE THE SIGNAL                        │◄─┐
└─────────────────────────────────────────────────────────────┘  │ 1410
                              │
                              ▼
┌─────────────────────────────────────────────────────────────┐
│         ADAPT THE HIERARCHICAL LATENT VARIABLES             │◄─┐
│           ACCORDING TO THE PREVIOUS ANALYSIS                │  │ 1420
└─────────────────────────────────────────────────────────────┘
                              │
                              ▼
┌─────────────────────────────────────────────────────────────┐
│                  TRAIN HYBRID INR MODEL                     │◄─┐
└─────────────────────────────────────────────────────────────┘  │ 1430
                              │
                              ▼
┌─────────────────────────────────────────────────────────────┐
│     CODE, INTO THE BITSTREAM, THE PARAMETERS OF THE INR    │◄─┐
│                         NETWORKS                            │  │ 1440
└─────────────────────────────────────────────────────────────┘
                              │
                              ▼
┌─────────────────────────────────────────────────────────────┐
│    CODE, INTO A BITSTREAM, THE LATENT VARIABLES BASED ON   │◄─┐
│              THE DETERMINED DISTRIBUTIONS                    │  │ 1450
└─────────────────────────────────────────────────────────────┘
```

1400

# FIG. 14

```
┌─────────────────────────────────────┐
│                                     │
│        GET THE BITSTREAM            │ ←──
│                                     │   1510
└─────────────────────────────────────┘
                  │
                  ▼
┌─────────────────────────────────────┐
│                                     │
│  DECODE, FROM THE BITSTREAM, THE    │ ←──
│  PARAMETERS OF THE INR NETWORKS     │   1520
└─────────────────────────────────────┘
                  │
                  ▼
┌─────────────────────────────────────┐
│ DECODE, FROM A BITSTREAM, THE LATENT│
│  VARIABLES BASED ON THE DETERMINED  │ ←──
│           DISTRIBUTIONS             │   1530
└─────────────────────────────────────┘
                  │
                  ▼
┌─────────────────────────────────────┐
│  PRODUCE, BY THE INR NETWORK, THE   │
│   DATA REGION FROM THE LATENT       │ ←──
│ VARIABLES, THE INR NETWORK USING THE│   1540
│  PARAMETERS OF THE INR NETWORK      │
└─────────────────────────────────────┘
```

1500

# FIG. 15

FIG. 16

Europäisches
Patentamt

European
Patent Office

Office européen
des brevets

# EUROPEAN SEARCH REPORT

**Application Number**

EP 24 30 7197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LE TRUNG HIEU ET AL: "INR-MDSQC: Implicit Neural Representation Multiple Description Scalar Quantization for Robust Image Coding", 2023 IEEE 25TH INTERNATIONAL WORKSHOP ON MULTIMEDIA SIGNAL PROCESSING (MMSP), IEEE, 27 September 2023 (2023-09-27), pages 1-6, XP034484490, DOI: 10.1109/MMSP59012.2023.10337691 [retrieved on 2023-12-08] * abstract * * Section II Proposed Method * ----- | 1,8-13 | INV. H04N19/147 |
| X | TRUNG HIEU LE ET AL: "Implicit Neural Multiple Description for DNA-based data storage", ARXIV.ORG, CORNELL UNIVERSITY LIBRARY, 201 OLIN LIBRARY CORNELL UNIVERSITY ITHACA, NY 14853, 13 September 2023 (2023-09-13), XP091612409, * abstract * * section 2 Spatial Frequency MDC * ----- | 11-13 | |
| X | WO 2022/245434 A1 (QUALCOMM INC [US]) 24 November 2022 (2022-11-24) | 11,14 | **TECHNICAL FIELDS SEARCHED (IPC)** H04N |
| A | * abstract * * paragraph [0086] - paragraph [0088] * * paragraph [0115] * * paragraph [0130] - paragraph [0134] * * figures 4,6 * ----- -/-- | 1-10,12, 13,15 | |

The present search report has been drawn up for all claims

| Place of search | Date of completion of the search | Examiner |
|---|---|---|
| The Hague | 23 May 2025 | Hampson, Frances |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

**EUROPEAN SEARCH REPORT**

Application Number

EP 24 30 7197

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HYUNJIK KIM ET AL: "C3: High-performance and low-complexity neural compression from a single image or video", ARXIV.ORG, CORNELL UNIVERSITY LIBRARY, 201 OLIN LIBRARY CORNELL UNIVERSITY ITHACA, NY 14853, 5 December 2023 (2023-12-05), XP091664794, * abstract * * section 2 Background Cool-Chic * * section 3 C3: Improving Cool-Chic * * figure 2 * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 23 May 2025 | Hampson, Frances |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 7197

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | Publication date | Patent family member(s) | Publication date |
|---|---|---|---|
| WO 2022245434 A1 | 24-11-2022 | BR 112023023427 A2 | 30-01-2024 |
| | | EP 4342178 A1 | 27-03-2024 |
| | | JP 2024519791 A | 21-05-2024 |
| | | KR 20240012374 A | 29-01-2024 |
| | | TW 202247650 A | 01-12-2022 |
| | | US 2022385907 A1 | 01-12-2022 |
| | | WO 2022245434 A1 | 24-11-2022 |

EPO FORM P0459

For more details about this annex : see Official Journal of the European Patent Office, No. 12/82